# EUROPEAN PATENT APPLICATION

(11) **EP 1 843 285 A1**
(43) Date of publication of application: **10.10.2007**
(21) Application number: 05709440.1
(22) Date of filing: 28.01.2005
(51) Int. Cl.: G06Q 10/00

(54) **WORK FLOW MANAGEMENT DEVICE, WORK FLOW MANAGEMENT SYSTEM, AND TEST SCENARIO CREATION METHOD**

(71) Applicant: Mitsubishi Electric Corporation, Chiyoda-ku Tokyo Tokyo 100-8310 (JP)
(72) Inventor: TADAUCHI, Yasushi Mitsubishi Denki KabushikiKaisha, Chiyoda-ku Tokyo 1008310 (JP); TAKASUGI, Hideki Mitsubishi Denki Kabushiki Kaisha, Chiyoda-ku Tokyo 1008310 (JP); OKAWA, Tsutomu Mitsubishi Denki Kabushiki Kaisha, Chiyoda-ku Tokyo 1008310 (JP); OKAZAKI, Takao Mitsubishi Denki Kabushiki Kaisha, Chiyoda-ku Tokyo 1008310 (JP)
(74) Representative: Nicholls, Michael John
(86) International application number: PCT/JP2005/001213
(87) International publication number: WO 2006/080078

(57) **Abstract**

To provide a workflow management device capable of automatically testing a workflow in a workflow management system.

A workflow management device has a workflow processor (331), and a proxy function unit (34). The workflow processor (331) includes: a function of generating a circular document by setting, based on a request from a client computer within an organization, a flow definition for setting an approval route, having a set circulation order, to a prototype held by an operation application, and an e-mail transmission definition for notifying presence of the circular document to a client computer of a next approver on the approval route; a function of selecting the next approver based on the flow definition and setting the selected approver to the e-mail transmission definition, when an earlier approver on the approval route completes reading of the circular; and a function of notifying presence of the circular document to the next approver based on the e-mail transmission definition. The proxy function unit (34) records requests concerning the circular document transmitted from the client computer during the circulation of the circular document, and generates a test scenario that has the requests disposed in the order of the approval route.

## Description

### TECHNICAL FIELD

The present invention relates to a workflow management device and a workflow management system that can circulate information using a computer among personnel in an organization. The present invention also relates to a test scenario generation method that is used to test a workflow processing in the workflow management system.

### BACKGROUND ART

Conventionally, a workflow management system has been proposed that manages and automates a flow of documents, information, and tasks to be delivered among staffs following a business process definition, when the staffs work using a network in an organization such as an enterprise (for example, see Patent Literature 1).

Patent Literature 1: Japanese Patent Application Laid-Open Publication No. 2002-215856

### DISCLOSURE OF INVENTION

### PROBLEM TO BE SOLVED BY THE INVENTION

According to a conventional workflow management system, there are plural flow patterns of documents, information, and tasks depending on combinations of contents processed by staffs. For a business process including a flow branch and waiting, the number of patterns of a flow route further increases. In carrying out a system test of an operation application that operates in the workflow management system, it is necessary to sort out test cases covering all such flow routes, manually deliver each one document, and confirm whether a predetermined operation is carried out at each point on the flow route. Particularly, for a large-scale or complex operation application, much work time and labor are consumed for this system test because documents managed by the workflow management system cannot hold the same status depending on a flow transition. In other words, a flow route to carry out a system test cannot be generated from only history information of a document stored at each point on the flow route generated in the past.

The present invention has been achieved in view of the above problems. It is an object of the present invention to provide a workflow management device and a workflow management system that can automatically test a workflow processing of an operation application that operates on the workflow management system. It is another object of the present invention to provide a test scenario generation method for generating a test scenario used to test a workflow that is executed by the workflow management system.

### MEANS FOR SOLVING PROBLEM

To achieve the above object, a workflow management device according to the present invention includes a document generating unit that sets the following definitions based on a request from a client computer of a person within an organization, and generates a circular document, the definitions including: a flow definition for setting an approval route, having a set sequence of persons within the organization to whom a circular is to be circulated, to a prototype held by an operation application for generating the circular, and for changing the set approval route following an input item definition; an e-mail transmission definition for notifying presence of a circular document to a client computer of a next approver on the approval route; and the input item definition for setting application contents of the circular; a flow control unit that selects the next approver based on the flow definition and sets the selected approver to the e-mail transmission definition, when an earlier approver on the approval route completes reading of the circular; and an e-mail transmitting unit that notifies presence of the circular document to a client computer of the next approver based on the e-mail transmission definition, the workflow management device further comprising a proxy unit that records requests concerning the circular document transmitted from the client computer during the circulation of the circular document, and generates a test scenario that has the requests disposed in the order of the approval route. The workflow management device tests a workflow of the operation application, using the test scenario based on an instruction from the client computer.

### EFFECT OF THE INVENTION

According to the present invention, a workflow in a workflow management system can be tested using test scenarios collected by a proxy unit or appropriating or using the test scenario, and the labor of generating requests to carry out a workflow processing one by one in an approval route to be tested can be eliminated.

### BRIEF DESCRIPTION OF DRAWINGS

[Fig. 1] Fig. 1 is a schematic for illustrating connection between users in an organization.
[Fig. 2] Fig. 2 is a schematic for illustrating an example of a configuration of a workflow management system.
[Fig. 3] Fig. 3 is a schematic for illustrating a structure of a business process definition.
[Fig. 4] Fig. 4 is a flowchart of one example of a workflow processing.
[Fig. 5] Fig. 5 is a block diagram of a functional configuration of a server that is used in the workflow management system according to the present invention.
[Fig. 6] Fig. 6 is a schematic for illustrating a data structure of test scenario data.
[Fig. 7] Fig. 7 is a schematic for illustrating an example of a manager page.
[Fig. 8] Fig. 8 is a schematic for illustrating an example of a proxy function setting screen.
[Fig. 9] Fig. 9 is a schematic for illustrating an example of a test scenario list screen.
[Fig. 10] Fig. 10 is a schematic for illustrating an example of a test scenario management page.
[Fig. 11] Fig. 11 is a schematic for illustrating an outline of a request structure.
[Fig. 12] Fig. 12 is a block diagram of a functional configuration of a client computer that is used in the workflow management system.
[Fig. 13] Fig. 13 is a flowchart of a process for determining whether a user has an account of manager authority.
[Fig. 14-1] Fig. 14-1 is a flowchart (part one) of a procedure of a setting processing of a proxy function.
[Fig. 14-2] Fig. 14-2 is a flowchart (part two) of a procedure of a setting processing of a proxy function.
[Fig. 15] Fig. 15 is a flowchart of a procedure of an operation processing of the workflow management system when a test mode is ON and OFF.
[Fig. 16] Fig. 16 is a flowchart of a procedure of a management processing of a test scenario.
[Fig. 17] Fig. 17 is a flowchart of a procedure of an edit processing of the test scenario data by a client computer.
[Fig. 18] Fig. 18 is a schematic for illustrating an example of a test scenario edit screen.
[Fig. 19] Fig. 19 is an example of a data structure of the test scenario data that becomes a basis of the test scenario edit screen shown in Fig. 18.
[Fig. 20] Fig. 20 is a flowchart of a procedure of an execution processing of the test scenario by the client computer.

### EXPLANATIONS OF LETTERS OR NUMERALS

- 1: Workflow management system
- 2: Client computer
- 3: Server
- 4: Network
- 21, 31: Communication units
- 22: Web browser
- 23, 35: Data storages
- 24: Test tool
- 32: Authentication processor
- 33: Workflow engine
- 34: Proxy function unit
- 36: Control unit
- 241: Display processor
- 242: Store processor
- 243: Transmission processor
- 244: Reception processor
- 245: Action analyzer
- 331: Workflow processor
- 332: Document generating function
- 333: Flow control function
- 334: E-mail transmitting function
- 335: Proxy function setting unit
- 336: Test scenario managing unit
- 341: Request processor
- 342: Filtering unit
- 343: Data format converter
- 344: Data store processor

### BEST MODE(S) FOR CARRYING OUT THE INVENTION

Exemplary embodiments of a workflow management device, a workflow management system, and a test scenario generation method according to the present invention will be explained in detail below with reference to the accompanying drawings.

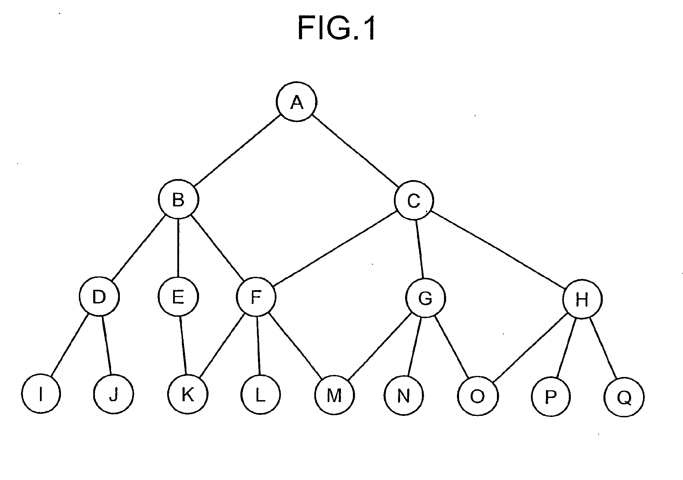

In the following explanation, the workflow management system is applied to an organization such as an enterprise, and a circular is taken an example of a workflow. A route for circulating a document (an approval route or flow) differs depending on a kind of document such as an inquiry about a purchase of software, application of an e-mail address, a trip report, and settlement of traveling expenses. Even when documents are of the same kind, a circulation route and the order of circulating these documents differ depending on the amount to be approved, for example. In other words, when the same staff of the same department circulates documents, approval routes of the documents differ depending on the kind and the contents of the documents. Fig. 1 is a schematic for illustrating connection between persons (hereinafter, "user") in an organization. In Fig. 1, alphabets A, B, and the like denote users. For example, when a user A makes an enquiry about a purchase of software at ten thousand yen, the enquiry is circulated in the order of A, B, D, and I. When the user A makes an enquiry about a purchase of software at thirty thousand yen, the enquiry is circulated in the order of A, B, D, I, D, and J. For a trip report, the user A circulates the report in the order of A, C, G, and N. Depending on the kind and the contents of a document, the approval route of the generated circular is different. A rule of generation of a circular and a rule of determination of an approval route are different between organizations. Therefore, the following explanations are all examples, and the present invention is not limited to these examples.

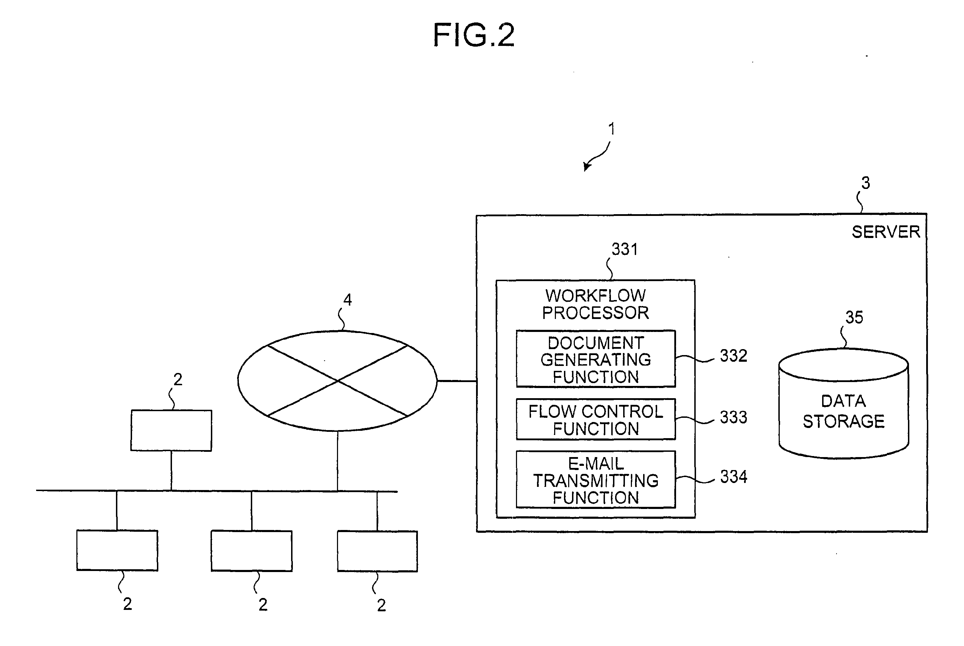

The outline of a workflow processing in the workflow management system is explained first. Fig. 2 is a schematic for illustrating an example of a configuration of a workflow management system. A workflow management system 1 has a configuration that a client computer 2 such as a personal computer held by each user in an organization such as an enterprise and a server 3 that manages a workflow processing within the organization are connected together via a network 4. The server 3 functions as a web application server that carries out a workflow processing, and the client computer 2 and the server 3 mutually transmit and receive data using the HTTP (HyperText Transfer Protocol). The server 3 corresponds to a workflow management device in the claims.

The server 3 includes a workflow processor 331 and a data storage 35. The workflow processor 331 has a prototype called a business process definition for each operation application to generate a document (circular) corresponding to a kind of document. The workflow processor 331 has a document generating function 332 of generating a document (circular) from contents that are input to the business process definition, a flow control function 333 of transmitting the document to the next user based on an approval route that is set in the generated document, and an e-mail transmitting function 334 of notifying the next user that the document is circulated to this user based on an e-mail transmission definition 303 that is set in the generated document. The document generating function 332 corresponds to a document generating unit in the claims, the flow control function 333 corresponds to a flow control unit in the claims, and the e-mail transmitting function 334 corresponds to an e-mail transmitting unit in the claims.

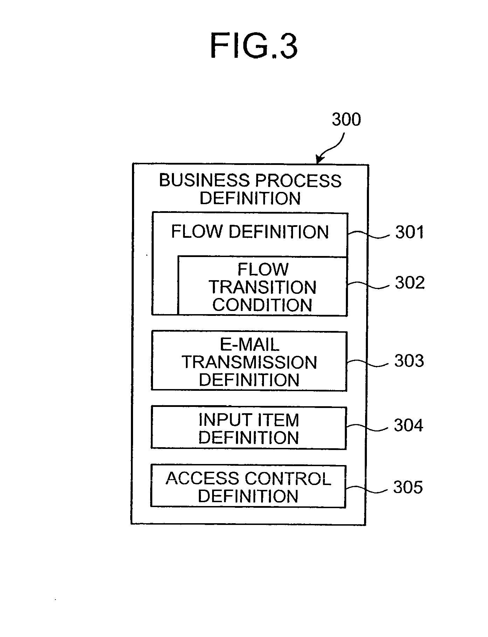

Fig. 3 is a schematic for illustrating a structure of a business process definition. A business process definition 300 includes a flow definition 301 for defining a flow of a circulation within an organization, an e-mail transmission definition 303 for transmitting an e-mail to the next user when a document is circulated to this user, and an input item definition 304 for inputting contents of the circular.

In the flow definition 301, an approval route as the order of circulating a document set by a user is defined. The user can input this definition. Alternatively, the approval route can be set using user information including a post or a department of the user in the organization prepared in advance, or the approval route can be selected from among plural approval routes prepared in advance. The flow definition 301 includes a flow transition condition 302 which includes an approval route corresponding to the contents (application contents) of the input item definition 304, flexibility in the order of circulating a document within the approval route, and a definition that a person set in a certain input item value becomes the next approver.

The e-mail transmission definition 303 is related to the flow definition 301. In the e-mail transmission definition 303, a destination of the next user to whom a message that the circulation arrives is informed and a transmission source of this notice are defined based on the contents of the flow definition 301. For example, when circulating a document in the order of A, B, D, and I in the example shown in Fig. 1, when the user A generates a document (circular), the e-mail address of a user B is set as the destination, and the e-mail address of the user A is set as the transmission source, in the e-mail transmission definition 303. Copies (a carbon copy and a blind carbon copy), a title, a body text, an e-mail header, necessity of a confirmation e-mail, and the like that are to be notified to the receiver can be also set in the e-mail transmission definition 303.

The input item definition 304 concerns the application contents that are input to the document (circular). The contents that are input to the input item definition 304 are used as determination information in the flow transition condition 302 within the flow definition 301 at the time of determining whether it is necessary to change the contents of the flow definition 301.

The business process definition 300 can further include an access control definition 305 for determining whether a user who requests for reading the circular can read the document. As explained above, when a user who generates a new circular (hereinafter, "an issuer") inputs data to a predetermined definition item of the business process definition 300, a document (circular) having a unique document ID is generated.

The document generating function 332 has a function of generating a new document having a uniquely identifiable document ID, when the issuer sets the assigned operation application (a kind of document (circular)) and the approval route, or when the issuer or the next user on the approval route (hereinafter, "an approver") inputs the application contents into the document.

The flow control function 333 has a function of setting the e-mail address of the next approver and the e-mail address of a transmitter (an issuer or an approver) who transmits a document, into the e-mail transmission definition 303 based on the approval route of the document, when the document having a new document ID is generated. With this arrangement, the flow of the document based on the approval route is controlled. The flow control function 333 also has a function of comparing a determined document into which the application contents are input by the issuer or the approver, with a flow transition condition, determining whether the approval route needs to be changed, and changing the approval route when the change is necessary. For example, in the circulation of the purchase application in the organization shown in Fig. 1, the approval route is in the order of A, B, D, and I when the purchase amount is equal to or less than a predetermined amount, but the approval route becomes the order of A, B, D, I, D, and J when the purchase amount exceeds the predetermined amount. When the circulation generated by the issuer A indicates a purchase amount less than the predetermined amount, but approver B changes the purchase amount to a level higher than the predetermined amount, the flow control function 333 changes the approval route to the latter route. When it is defined in the flow transition condition that a person set in a certain input item becomes the next approver, the flow control function 333 changes the approval route to a person who is set in this input item of the determined document when this person is set in this input item.

The e-mail transmitting function 334 has a function of transmitting an e-mail to the next approver defined in the e-mail transmission definition 303, when a user (an issuer or an approver) on the approval route confirms and determines the application contents. This e-mail has a standard format of informing the next approver that the circular has arrived. For example, the e-mail describes a URL (uniform resource locator) that indicates a location of the circulation.

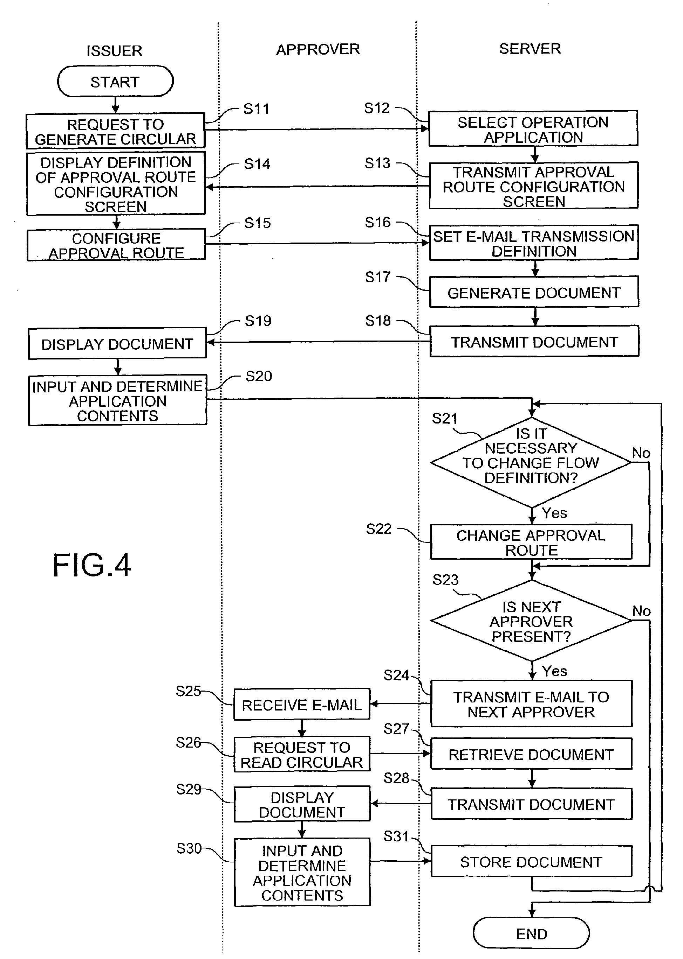

Fig. 4 is a flowchart of one example of a workflow processing. First, an issuer transmits a circulation generation request that assigns a kind of circulation (a kind of operation circulation) to the server 3, using the own client calculator 2 (step S11). The workflow processor 331 of the server 3 selects an operation application based on the circulation generation request (step S12), and transmits an approval route setting screen including the contents of the business process definition 300 to the client computer 2 of the issuer (step S13).

When the approval route setting screen is displayed in the client computer 2 of the issuer (step S14), the issuer sets an approval route to the flow definition 301 in the business process definition 300 (step S15). The approval route can be automatically set based on personal information of the issuer and organizational information. Alternatively, users to whom a circulation is made can be selected from a list of approvers defined in advance in the business process definition 300. When the approval route is set, the set contents are transmitted to the server 3.

The workflow processor 331 of the server 3 sets the e-mail transmission definition 303 based on the set contents (the approval route) of the flow definition 301 (step S16), or sets the e-mail address of the next approver as a destination and sets the e-mail address of the issuer as a transmission source, and generates a document as a circular (step S17). A document ID to uniquely identify the document is attached to this document. The generated document is transmitted to the issuer (step S18).

When the document is displayed in the client computer 2 of the issuer (step S19), the issuer inputs the application contents into the document thereby determining the contents (step S20), and the determined contents are transmitted to the server 3. The server 3 checks the contents input by the issuer, personal information of the issuer, and information of the organization to which the issuer belongs, and determines whether it is necessary to change the flow definition 301 (step S21). The server 3 determines whether it is necessary to change the approval route, based on the flow transition condition 302 set in advance that describes a relationship between the input item and the approval route for various operation applications. When it is necessary to change the flow definition 301 (Yes at step S21), the approval route is changed based on the flow transition condition 302 (step S22). When it is not necessary to change the flow definition 301 (No at step S21), the server 3 determines from the approval route whether the next approver is present (step S23). When the next approver is present (Yes at step S23), the server 3 transmits an e-mail to this next approver (step S24).

When the next approver receives the e-mail (step S25), the approver transmits a circulation read request to the URL included in the e-mail (step S26). This circulation read request includes the document ID. The server 3 retrieves the data storage 35 for the document corresponding to the document ID included in the circulation read request (step S27), and transmits the extracted document to the client computer 2 of the approver (step S28). When the document is displayed in the client computer 2 of the issuer (step S29), the approver inputs application contents to a necessary part of the document, and determines the contents (step S30). When the contents are determined, the contents of the document are transmitted to the server 3, and are written onto the document of the same document ID, thereby storing the document in the data storage 35 (step S31). The process proceeds to step S21, and the above processing is repeated until when the document reaches the last approver. When the next approver is not present as a result of check at step S23 (No at step S23), the workflow processing ends.

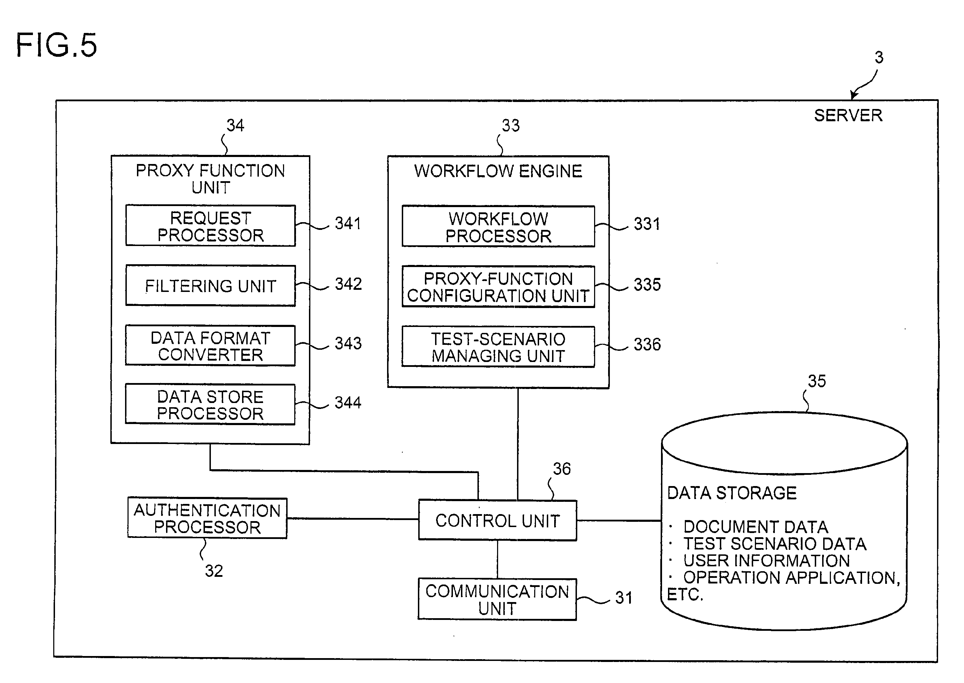

The workflow management system on which the test mode function is mounted according to the present embodiment is explained next. The workflow management system 1 has a network configuration which is the same as that shown in Fig. 2. Fig. 5 is a block diagram of a functional configuration of the server that is used in the workflow management system according to the present invention.

The server 3 includes: a communication unit 31 that transmits and receives data to and from the client computers 2 and other communication devices connected to the network 4; an authentication processor 32 that determines whether a user is a user of this system, and that determines whether the user has manager authority when the user is the system user; a workflow engine 33 that carries out a workflow processing in the client computer 2 belonging to a predetermined organization; a proxy function unit 34 that records an access of each client computer 2 to the server 3, and generates a text scenario; and the data storage 35 that stores data such as test scenario data and operation applications.

The authentication processor 32 has a function of checking whether a user is a user of this system, and checking whether the user has manager authority when the user logs-in using an account of the manager authority. According to the present embodiment, only a user having manager authority can set a test mode. A system manager can set the manager authority account in advance. The authentication can be carried out according to a form authentication using an ID/password, or a biometrics authentication, or an IC (integrated circuit) card authentication.

The data storage 35 consists of a recording medium such as a hard disk, and stores a document (circular) generated by the workflow processing, test scenario data including a proxy setting condition and a test scenario, user personal information or user information including a post information within the organization that is used to set the flow definition 301 in the business process definition 300, and operation applications that operate on the workflow management system 1. The operation application refers to individual applications to generate a document (circular) of an inquiry about a purchase of software, an application for an e-mail address, a trip report, a settlement of traveling expenses, and the like. The application is prepared for each kind of document (circular). The document data, the test scenario data, the user information, and the operation application that are stored in the data storage 35 can be separately stored in hard disks and hardware of the server. Alternatively, a plurality of pieces of information can be combined together to be stored in one unit of hardware, and the combined information can be separately stored in plural units of hardware.

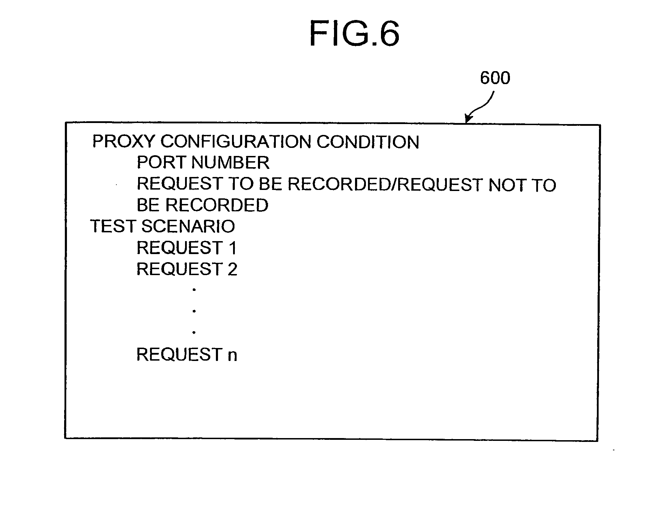

Fig. 6 is a schematic for illustrating a data structure of the test scenario data. Test scenario data 600 includes: a proxy setting condition including a setting condition of the proxy function unit 34 of the server 3 that is necessary to generate a test scenario; and a test scenario that is generated based on request data from the client computer 2 in the test mode described later. The proxy setting condition includes a port number that is necessary to record a request transmitted from the client computer 2, and a request to be recorded or a request not to be recorded among requests from the client computers 2. Either a request to be recorded or a request not to be recorded is set. The test scenario includes requests collected by the proxy function unit 34 to which the proxy setting condition is set. In Fig. 6, an example that a test scenario includes requests 1 to n (where n is a natural number) is shown. The request is a command that is used to transmit information necessary to circulate a document although the request is not recorded in the document when circulating the document on the approval route, like an HTTP request that is transmitted when a client computer generates and determines a document (circular).

The workflow engine 33 includes: the workflow processor 331 that carries out a normal workflow processing; a proxy function setting unit 335 that sets a condition to the proxy function unit 34 to collect requests; and a test scenario managing unit 336 that manages the test scenario data stored in the data storage 35, based on an instruction from the client computer 2. The workflow processor 331 carries out the processing explained above with reference to Fig. 4. According to the present embodiment, the proxy function setting unit 335 and the test scenario managing unit 336 are operated based on instructions from the client computers 2 connected to the server 3 via the network 4. Therefore, a page used to operate the proxy function setting unit 335 and the test scenario managing unit 336 is prepared in advance. A display of this page in the client computer 2 by a request from a user is explained below.

The proxy function setting unit 335 is a processor that carries out a setting to make the proxy function work for each operation application. The proxy function setting unit 335 has a function of transmitting to the client computer 2 a manager page to which the setting is carried out based on a request from a user having manager authority, and setting the contents set in the manager page to the proxy function unit 34. The proxy function setting unit 335 corresponds to a proxy function setting unit in the claims.

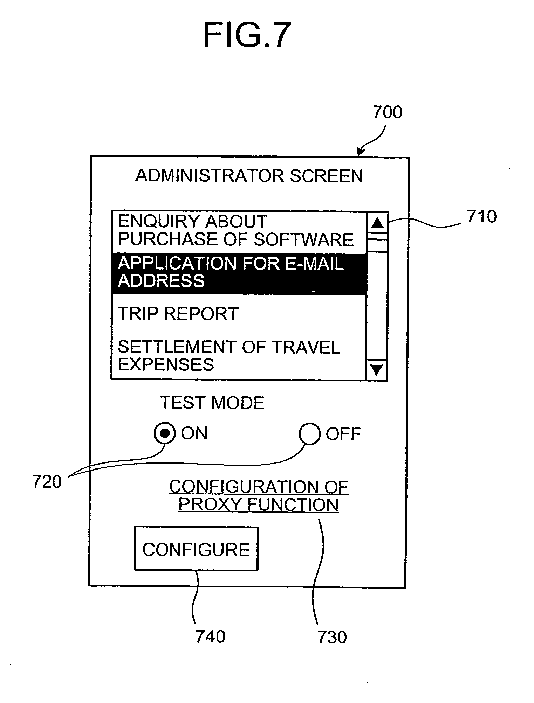

Fig. 7 is a schematic for illustrating an example of a manager page that is displayed when the server is logged in with the account of manager authority. When a user logs in with the account of manager authority, the proxy function setting unit 335 transmits this manager page 700 to the client computer 2 of this user, and displays this manager page. The manager page 700 includes: a list box 710 on which a list of operation applications registered at present is displayed; an interface 720 such as a radio button that is used to switch ON/OFF a test mode; a link 730 having a name of "setting of the proxy function" that is used to make transition to a proxy function setting screen 800 described later; and a "set" button 740 that is used to store the contents set in the manager page 700, and execute the processing set in the proxy function setting unit 335. In the manager page 700, it is possible to set whether the test mode is to be set, and set the proxy function when the test mode is to be set. In Fig. 7, only the contents according to the present embodiment are displayed. In actual practice, the manager page 700 is structured to be able to control functions necessary to operate the system, such as addition/deletion of operation applications and starting/stopping of services.

In the manager page 700, the "setting of the proxy function" link 730 changes to a page for setting the proxy function in the operation application to be tested that is selected in the list box 710. When the "set" button 740 is pressed while the test mode is ON, the contents set in the manager page 700 and in the "setting of the proxy function" link 730 are stored, and the proxy function is operated in the set contents. When the "set" button 740 is pressed while the test mode is OFF, the proxy function is stopped when the proxy function is working at present.

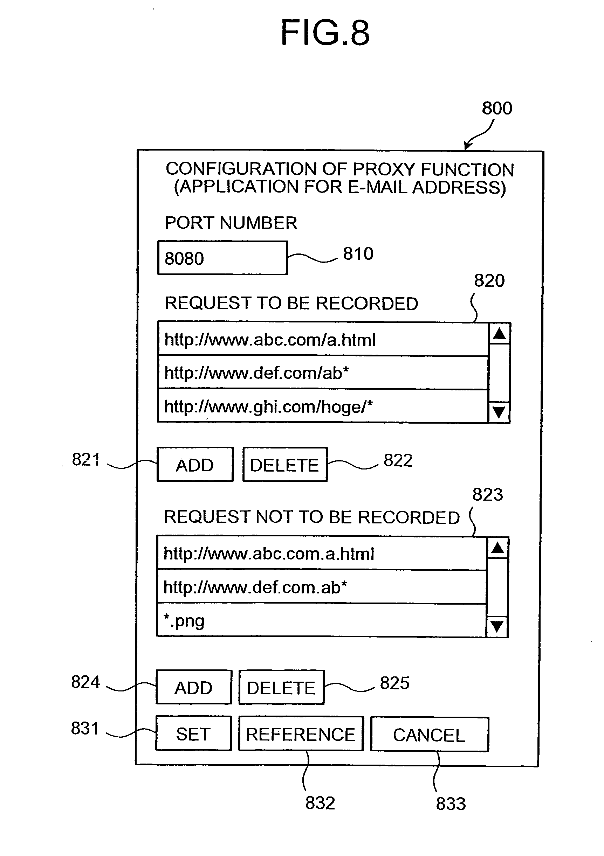

Fig. 8 is a schematic for illustrating an example of the proxy function setting screen. The proxy function setting screen 800 is displayed when the "setting of the proxy function" link 730 is clicked on the manager page 700 shown in Fig. 7. In Fig. 8, "e-mail address application" which is selected as the operation application is displayed. The proxy function setting screen 800 in the operation application all includes a port number 810, a request to be recorded 820, and a request not to be recorded 823, as items indicating filter information.

The port number 810 is necessary to record a request transmitted from the client computer 2. A port number of a proxy server that is set at a web browser of the client computer 2 needs to be matched with this port number. The request to be recorded 820 and the request not to be recorded 823 are used to set access destinations of a request to be recorded or not be recorded, among requests from the client computers 2. Either the request to be recorded 820 or the request not to be recorded 823 is set. The request to be recorded 820 and the request not to be recorded 823 can be added or deleted using "add" buttons 821 and 824 or "delete" buttons 822 and 825 that are disposed below the respective list boxes.

A "set" button 831 functions to store the contents that are input to the proxy function setting screen 800, and return to the manager page 700 shown in Fig. 7. A "cancel" button 833 functions to end the proxy function setting screen 800 and return to the manager page 700 shown in Fig. 7, regardless of whether an input is made to the proxy function setting screen 800.

When a "reference" button 832 is pressed, a test scenario list screen is displayed. The test scenario list screen displays a list of test scenario data recorded in the past by the operation application selected in the list box 710 of the manager page 700 shown in Fig. 7.

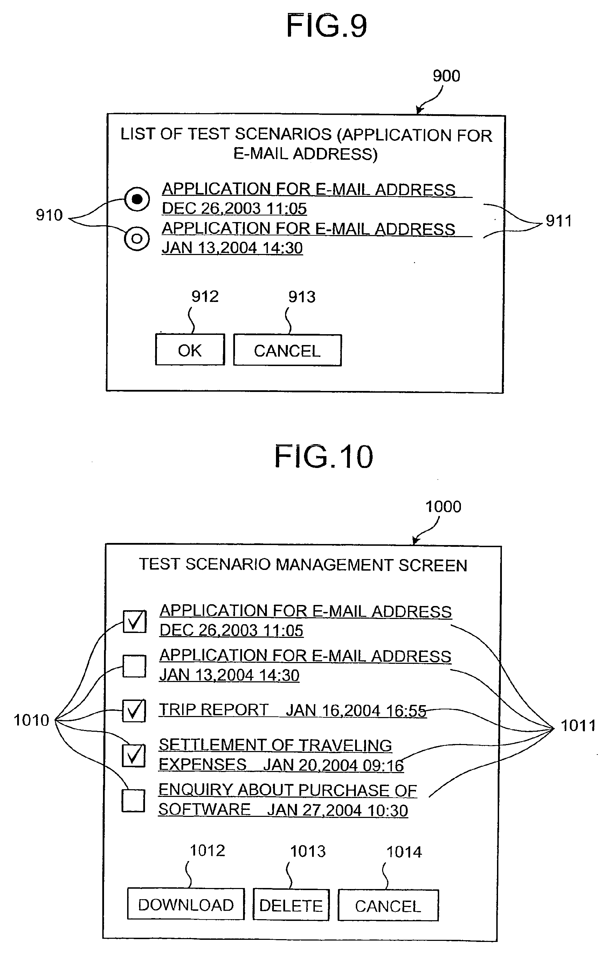

Fig. 9 is a schematic for illustrating an example of the test scenario list screen. This test scenario list screen 900 displays a list of test scenario data stored in the data storage 35. However, only the test scenario data concerning the operation application selected on the manager page 700 is displayed. Therefore, in Fig. 9, test scenario data concerning the "e-mail address application" is shown. In each item 911 in the list, a radio button 910 to select only one item from the list is provided. When an "OK" button 912 is pressed, test scenario data corresponding to an item selected with any one of the radio buttons 910 is read from the data storage 35, the proxy setting condition is reflected in the proxy function setting screen 800, and the proxy function setting screen 800 is displayed. When a "cancel" button 913 is pressed, the test scenario list screen 900 is closed, and the display is returned to the proxy function setting screen 800 shown in Fig. 8 that does not reflect contents regardless of a selection of contents with the radio button 910. Each item 911 of the test scenario list screen 900 is linked with corresponding test scenario data. When the item 911 is selected, contents information corresponding to this item is displayed in detail.

The test scenario managing unit 336 has a function of carrying out a management processing of test scenario data stored in the data storage 35, based on an instruction from the user. For example, the test scenario managing unit 336 retrieves and extracts test scenario data indicated by the user, makes the client computer 2 display the list of the test scenario data, transmits the test scenario data selected by the user to the client computer 2, and deletes the test scenario data.

Fig. 10 is a schematic for illustrating an example of the test scenario management page. On this test scenario management page 1000, a list of test scenario data stored in the data storage 35 is displayed. Check boxes 1010 that enable the user to select plural items from the list are provided for items 1011 in the list. When a "download" button 1012 is pressed, test scenario data corresponding to items that are checked in the check boxes 1010 among the items in the list are transmitted to the client computer 2 of the user. When a "delete" button 1013 is pressed, scenario data corresponding to items that are checked in the check boxes 1010 among the items in the list are deleted from the data storage 35. When a "cancel" button 1014 is pressed, the processing on the test scenario management page 1000 is stopped, regardless of presence or absence of checks in the check boxes 1010. Each item 1011 is linked with corresponding test scenario data to enable the user to read contents of the test scenario data.

The proxy function unit 34 has a function of collecting requests based on setting contents of the proxy function setting screen 800 shown in Fig. 8 set by users, and generating a test scenario. The proxy function unit 34 includes a request processor 341, a filtering unit 342, a data format converter 343, and a data store processor 344. The proxy function unit 34 corresponds to a proxy unit in the claims.

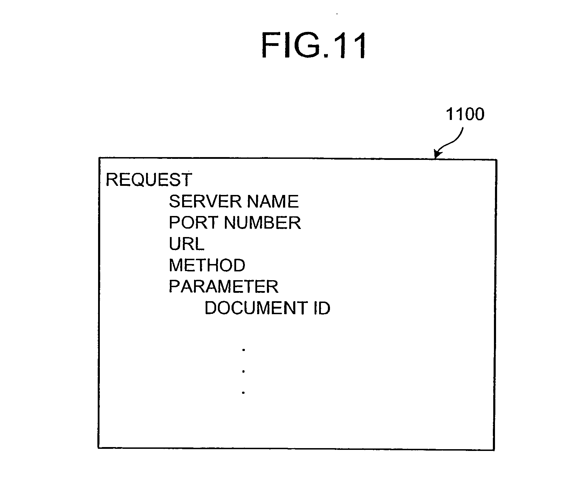

The request processor 341 has a function of temporarily obtaining a request transmitted from the client computer 2 to operate the operation application, when the test mode is ON. Fig. 11 is a schematic for illustrating an outline of a request structure. A request 1100 in the drawing shows further details of the contents of one request i (where i denotes a natural number from 1 to n) that constitutes the test scenario shown in Fig. 6. As described above, according to the present embodiment, the request refers to the HTTP request. One request 1100 includes a name of the server, a port number, a path (URL; uniform resource locator), a method, and request parameters. The request parameters include a document ID of a corresponding document (circular). The request processor 341 receives this request and obtains the contents before the request reaches the server 3. The request processor 341 corresponds to a request processing function in the claims.

The filtering unit 342 has a function of reading filter information, comparing this filter information with the obtained request, and determining whether to record the filter information into the data storage 35 as data constituting the test scenario data. Specifically, the filtering unit 342 determines whether a path of the HTTP request obtained by the request processor 341 corresponds to any one of the request to be recorded 820 and the request not to be recorded 823 on the proxy function setting screen 800 shown in Fig. 8. For example, when the path corresponds to the request to be recorded 820, the filtering unit 342 delivers data to the next data format converter 343 to store the HTTP request into the data storage 35. When the path does not correspond to the request to be recorded 820, the HTTP request is not recorded. Therefore, the filtering unit 342 returns the data to the communication route, and delivers the data to the server 3. This similarly applies when the request not to be recorded 823 is set. The filtering unit 342 corresponds to a filter function in the claims.

The data format converter 343 has a function of converting a request that is determined to be recorded as data constituting the test scenario data by the filtering unit 342, into data of a data format that can be recognized according to a test rule 24 of the client computer 2. For example, the data format converter 343 converts the request into a data format of XML (extensible Markup Language) and CSV (Comma Separated Values). The data format converter 343 corresponds to a data format converting function in the claims.

The data store processor 344 has a function of storing a request converted by the data format converter 343, into the data storage 35. In this case, a request having the same document ID as a parameter as shown in Fig. 11 is stored into the test scenario in the test scenario data 600 shown in Fig. 6. The data store processor 344 corresponds to a data store processing function in the claims.

The proxy function unit 34 in the server 3 can realize a proxy function as a module, and can be operated on a web application server that carries out a workflow processing. Alternatively, a web application server that carries out a workflow processing and a web server having a proxy function can be provided.

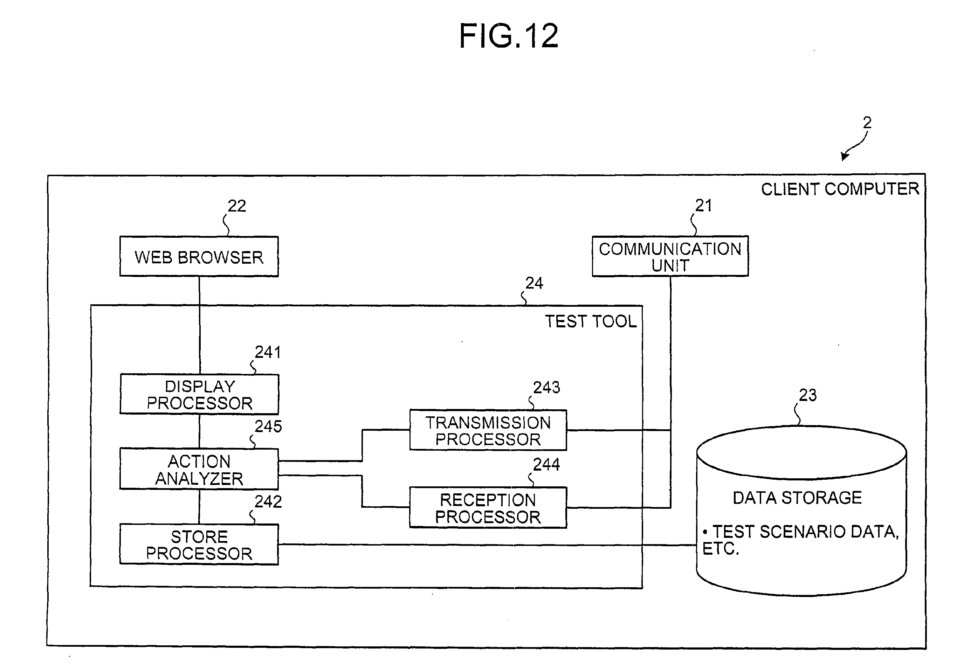

Fig. 12 is a block diagram of a functional configuration of the client computer that is used in the workflow management system. The client computer 2 includes: a communication unit 21 that transmits and receives data to and from the server 3 and other communication devices via the network 4; a web browser 22 that visually displays data obtained from the server 3 and data transmitted to the server 3, for the user of the client computer 2; a data storage 23 that stores data used in the client computer 2; and a test tool 24 that displays the manager page 700 and the test scenario management page 1000, and executes a generated test scenario.

The data storage 23 includes a recording medium such as a hard disk, and stores test scenario data downloaded from the server 3.

The test tool 24 is called when the user generates test scenario data and executes a test scenario, and has a function of generating test scenario data and executing a test scenario. The test tool 24 includes a display processor 241, a store processor 242, a transmission processor 243, a reception processor 244, and an action analyzer 245. The test tool 24 corresponds to a test unit in the claims.

The display processor 242 has a function of displaying necessary screens on the web browser 22 based on an instruction from the action analyzer 245, and notifying an input from the user via the web browser 22 to the action analyzer 245. For example, the display processor 241 displays components necessary to carry out a test and data contents analyzed by the action analyzer 245, on the web browser 22 based on an instruction from the action analyzer 245, and transmits an action made by the user on the web browser 22 to the action analyzer 245. While the test tool 24 is the web application in the present example, the test tool 24 can be a client application. In this case, the processing on the web browser in the web application becomes the processing on the screen for the client application, not on the web browser 22.

The store processor 242 has a function of storing data into the data storage 23 based on an instruction from the action analyzer 245. For example, when receiving an instruction to urge the storing of test scenario data from the action analyzer 245, the store processor 242 stores the test scenario data into the data storage 23.

The transmission processor 243 has a function of transmitting data to a predetermined communication device via a communication unit 21 based on an instruction from the action analyzer 245. For example, as a result of analysis by the action analyzer 245, there is a necessary action to transmit a request to the server 3, out of set values of a test scenario input by the user via the display processor 241. In this case, the transmission processor 243 transmits a request including this action as request data, to the server 3 via the communication unit 21. When receiving an action to urge the obtaining of test scenario data from the action analyzer 245, the transmission processor 243 transmits a request including this action as request data, to the server 3.

The reception processor 244 has a function of receiving data transmitted via the communication unit 21, and delivering the data to the action analyzer 245. For example, the reception processor 244 receives from the server 3 a response in reply to a request transmitted from the transmission processor 243, and delivers the received response to the action analyzer 245. When a response to the action to urge the obtaining of test scenario data is received, the reception processor 244 delivers the received response to the action analyzer 245.

The action analyzer 245 has a function of analyzing an action delivered from the display processor 241 or the reception processor 244, and instructing each processor to carry out a processing based on this action. For example, when an action to urge the execution of a test scenario is received via the web browser 22, the action analyzer 245 transfers the instruction to the transmission processor 243 to transmit the request based on the test scenario. When receiving an action to urge the storing of test scenario data, the action analyzer 245 transfers the instruction to the store processor 242 to store the test scenario data. When receiving an action to call the test scenario management function of the server 3, the action analyzer 245 transfers to the transmission processor 243, the instruction to call a test scenario setting page held by the test scenario managing unit 336. While the test tool 24 is the web application in the present example, the test tool 24 can be the client application. In this case, the processing on the web browser 22 in the web application becomes the processing on the screen for the client application, not on the web browser 22.

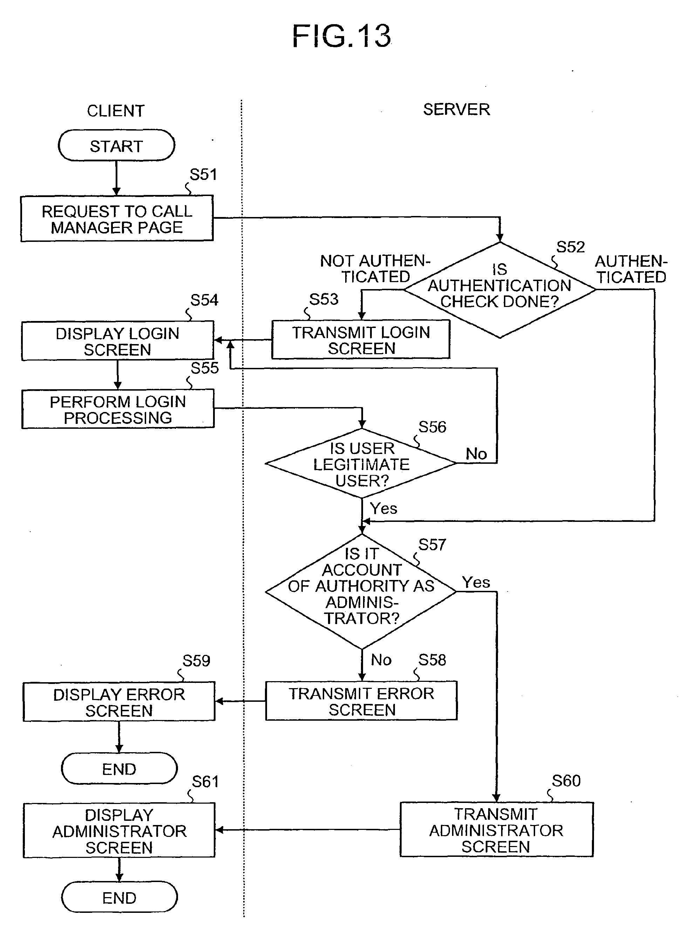

The operation processing procedure of the workflow management system 1 in the test mode is explained below with reference to a flowchart. According to the present embodiment, only a user who has the account of manager authority can set and cancel the test mode. Therefore, the processing of determining whether a user has the account of manager authority is explained first. Fig. 13 is a flowchart of a process for determining whether a user has the account of manager authority.

First, when the user requests for a call of the manager page 700 as shown in Fig. 7 from the client computer 2 (step S51), the authentication processor 32 of the server 3 carries out an authentication check of whether the user is an eligible user (step S52), and the server 3 determines whether the user is authenticated. When the user is not authenticated as a result of the authentication check (when the user is not yet authenticated at step S52), a login screen is transmitted to the client computer 2 (step S53). When the login screen is displayed in the client computer 2 of the user (step S54), the user inputs a user name and a password on the login screen. Based on this, the client computer 2 carries out a login processing (step S55). The authentication processor 32 of the server 3 carries out the authentication processing of the user based on the information input to the login screen, and determines about the user (step S56).

When the user is not the eligible user as a result of the determination, (No at step S56), the process returns to step S54 again, and the login screen is displayed. The authentication processor 32 carries out the authentication processing repeatedly. In this case, the number of times of displaying the login screen can be set to an optional number. When the user is authenticated as the eligible user (Yes at step S56) or when the user is authenticated at step S52, the authentication processor 32 checks whether the logged-in user has the account of manager authority (step S57). When the accessed user does not have an account of manager authority (No at step S57), the authentication processor 32 displays an error screen in the client computer 2 (step S59), and ends the processing.
When the accessed user has the account of manager authority (Yes at step S57), the proxy function setting unit 335 transmits the manager page 700 as shown in Fig. 7 to the client computer 2 (step S60). The manager page 700 is displayed in the client computer 2 (step S61) in a state that the test mode can be set, and the authentication processing ends.

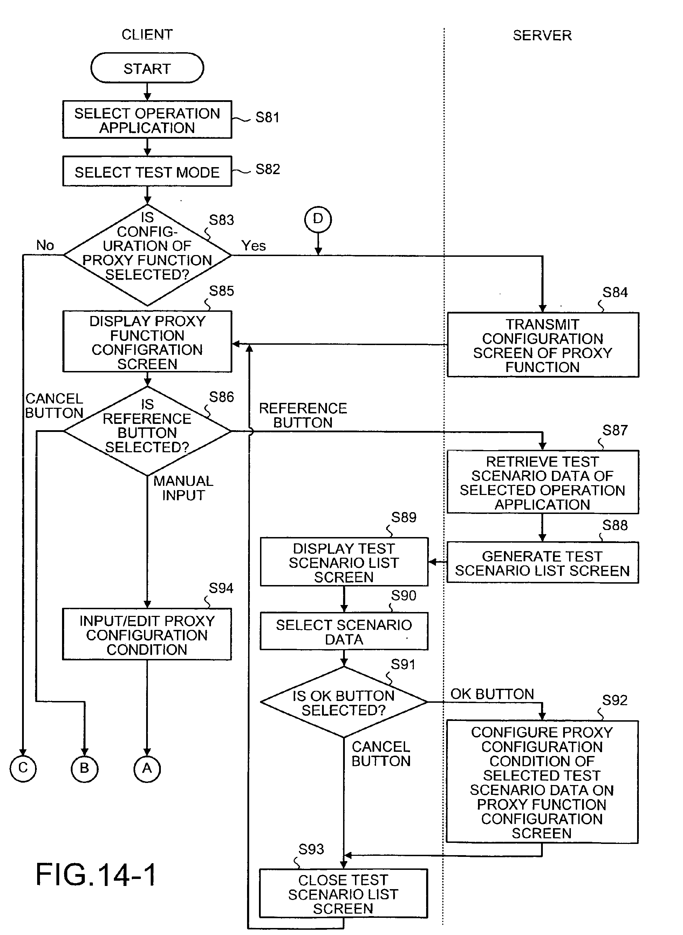

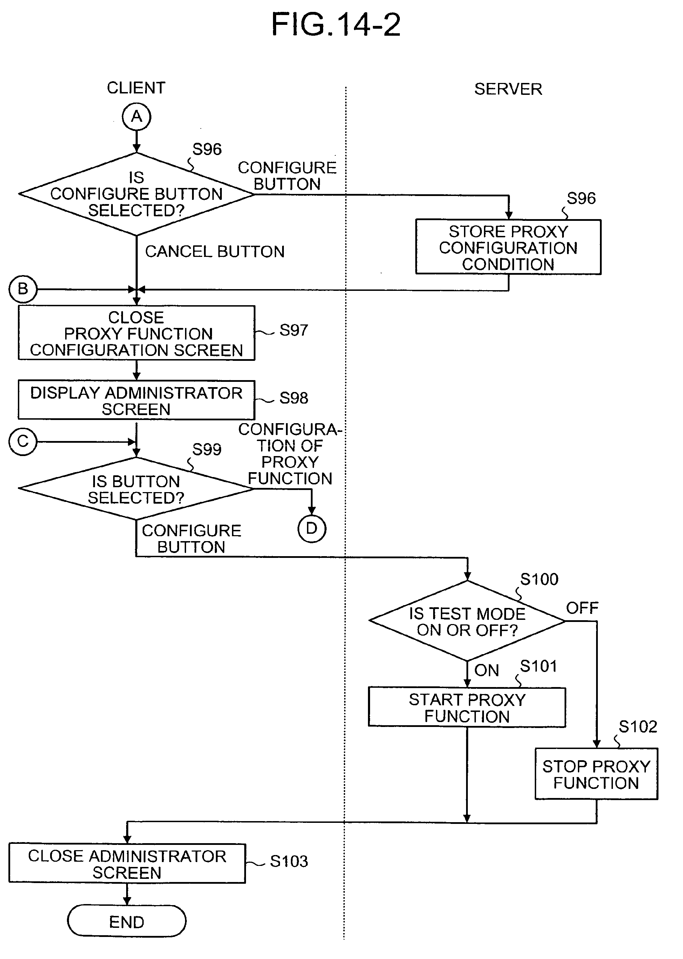

Fig. 14-1 and Fig. 14-2 are flowcharts of a procedure of the setting processing of the proxy function. A user who is confirmed to have manager authority with reference to Fig. 13 can set the proxy function on the manager page 700. First, the user selects an operation application in the manger page 700 (step S81), and selects a test mode (step S82). The proxy function setting unit 335 of the server 3 determines whether the user has selected the "setting of the proxy function" link 730 (step S83). When the "setting of the proxy function" link 730 has been selected (Yes at step S83), the proxy function setting unit 335 generates the proxy function setting screen 800 for the operation application selected at step S81 as shown in Fig. 8, and transmits the proxy function setting screen 800 to the client computer 2 (step S84).

The proxy function setting screen 800 is displayed in the client computer 2 (step S85), and the user inputs data. When the user presses the reference button (the reference button at step S86), the proxy function setting unit 335 of the server 3 retrieves the data storage 35 for test scenario data of the operation application selected at step S81 (step S87), generates the test scenario list screen 900 as shown in Fig. 9 (step S88), and transmits the test scenario list screen 900 to the client computer 2. The test scenario list screen 900 is displayed in the client computer 2 (step S89), and the user selects test scenario data (step S90).

When the user selects one test scenario data from the test scenario list screen 900 (the OK button at step S91), the proxy function setting unit 335 of the server 3 closes the test scenario list screen 900, and sets a proxy setting condition of the selected test scenario data to the proxy function setting screen 800 (step S92). Thereafter, when a cancel button is selected on the test scenario list screen 900 at step S91 (the cancel button at step S91), the proxy function setting unit 335 closes the test scenario list screen 900 (step S93), and the process returns to step S85.

When the user manually inputs data at step S86 (manual input at step S86), the user manually inputs a proxy setting condition to a predetermined position of the proxy function setting screen 800 or edits the screen called by pressing the reference button (step S94). For example, when the user does not use the past proxy setting condition, the user inputs a new proxy setting condition. When the user uses the past proxy setting condition, the user edits only the part which requires a change. When the user presses the set button after inputting a proxy setting condition (the set button at step S95), the proxy function setting unit 335 of the server 3 stores the input proxy setting condition (step S96). Thereafter, when the user presses the cancel button at step S95 or when the user presses the cancel button at step S86, the proxy function setting unit 335 closes the proxy function setting screen 800 (step S97), and displays the manager page 700 (step S98).

Thereafter, when the "setting of the proxy function" link 730 is not selected (No at step S83) at step S83 and when the "setting of the proxy function" link 730 is selected (setting of the proxy function at step S99), the process returns to step S84 again, and the above processing is repeated. When the "set" button 740 on the manager page 700 is pressed (the set button at step S99), the contents (including the contents of the proxy function setting screen 800) that are input to the manager page 700 are transmitted to the server 3. The proxy function setting unit 335 sets the contents to the server 3. In other words, when the test mode is ON at step S100, the proxy function is started (step S101). When the test mode is OFF at step S100, the proxy function is stopped (step S102).
Thereafter, the proxy function setting unit 335 closes the manager page 700 (step S103), and ends the proxy function setting processing. The test mode setting processing ends.

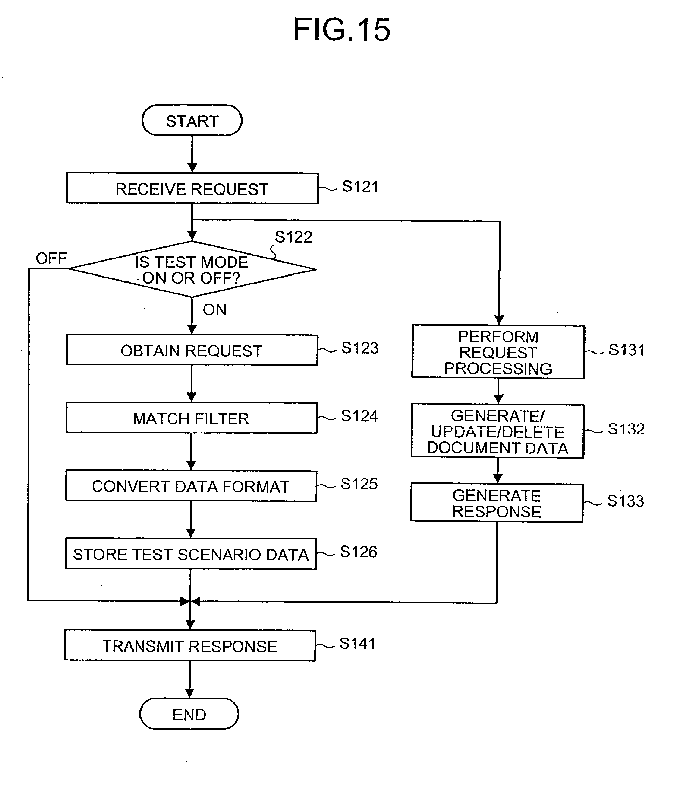

Fig. 15 is a flowchart of a procedure of the operation processing of the workflow management system when the test mode is ON and OFF. When receiving a request regarding the workflow processing from the client computer 2 of the user (step S121), the request processor 341 of the proxy function unit 34 of the server 3 obtains the request when the test mode is ON (ON at step S122) (step S123). The filtering unit 342 carries out a filter matching processing of reading the filter information in the test scenario data stored in the data storage 35, and extracting a request that matches the condition (step S124). The data format converter 343 converts the extracted data into data of a predetermined data format (step S125). The data store processor 344 stores the converted data as a test scenario into the data storage 35 (step S126). The test scenario is related to the document ID in the request, and is stored into the test scenario data. On the other hand, when the test mode is OFF (OFF at step S122), the processing at steps S123 to S126 is not carried out.

In parallel with the processing at steps S122 to S126, the workflow processor 331 of the server 3 carries out a normal workflow processing of a received request. In other words, the workflow processor 331 processes the received request (step S131), generates, updates, or deletes the document data following the request (step S132), generates a response of a result of the processing (step S133), and transmits the response to the client computer 2 (step S141). Thereafter, the client computer 2 displays the response from the server 3, and ends the request reception processing.

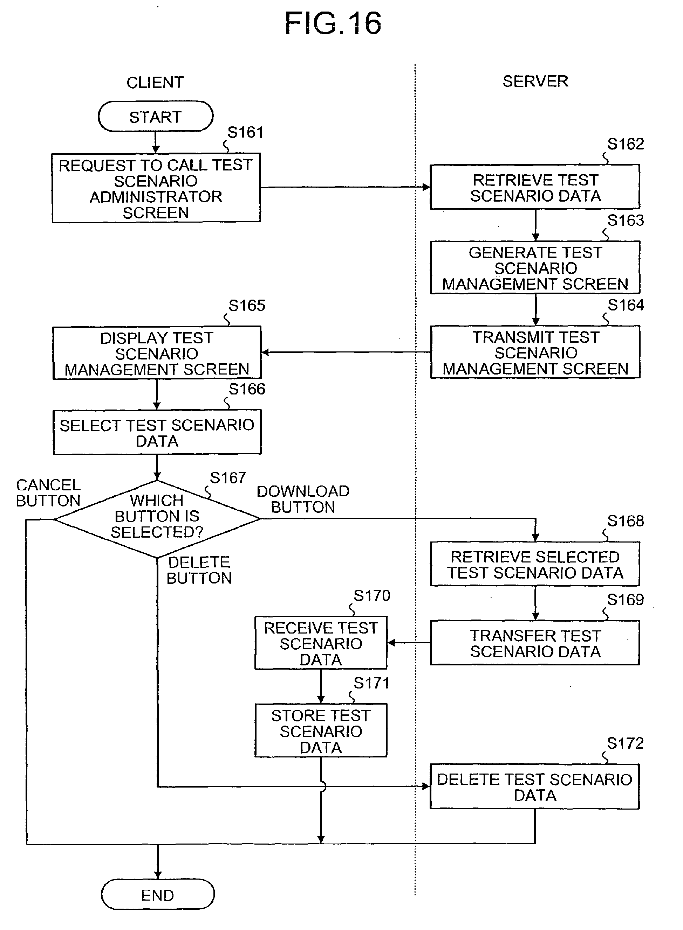

Fig. 16 is a flowchart of a procedure of the management processing of a test scenario. First, the user transmits to the server 3 a request for calling the test scenario management page 1000 shown in Fig. 10 (step S161). The test scenario managing unit 336 of the server 3 retrieves the data storage 35 for test scenario data (step S162), generates the retrieved result as the test scenario management page 1000 (step S163), and transmits the generated test scenario management page 1000 to the client computer 2 (step S164).

The client computer 2 displays the received test scenario management page 1000 (step S165), and the user selects test scenario data (step S166). Thereafter, when the user selects the "download" button 1012 on the test scenario management page 1000 (download at step S167), the test scenario managing unit 336 retrieves the data storage 35 for the checked test scenario data on the test scenario management page 1000 (step S168), and transfers the retrieved test scenario data to the client computer 2 (step S169). Upon receiving the test scenario data (step S170), the client computer 2 stores the received test scenario data into the data storage 23 of the own device (step S171), and ends the processing.

When the "delete" button 1013 on the test scenario management page 1000 is selected at step S167 (the delete button at step S167), the test scenario managing unit 336 retrieves the data storage 35 for the checked test scenario data on the test scenario management page 1000, deletes the test scenario data (step S172), and ends the processing.

When the "cancel" button 1014 on the test scenario management page 1000 is selected at step S167 (the cancel button at step S167), no processing is carried out, and the processing ends.

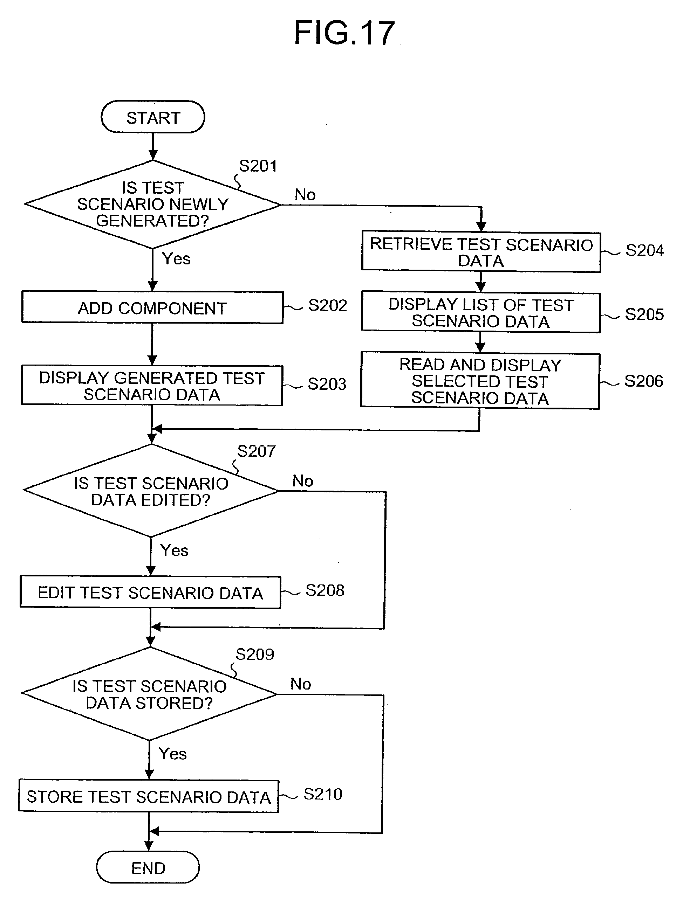

Fig. 17 is a flowchart of a procedure of the edit processing of downloaded test scenario data by the client computer. First, the client computer 2 activates the test tool 24 to edit the test scenario data or execute the test scenario. When the user selects generation of a new test scenario (Yes at step S201), a component is added (step S202). The component refers to plural requests that constitute a test scenario, and data including information necessary to execute the test scenario. The client computer 2 displays test scenario data generated based on the addition of the component (step S203).

On the other hand, when the user selects the use or a citation of a test scenario generated in the past (No at step S201), the action analyzer 245 retrieves the data storage 23 of the own device for test scenario data (step S204). The display processor 241 displays a list of test scenario data (step S205). The client computer 2 reads the test scenario data selected, from the list of the test scenario data, by the user from the data storage 23, and displays the read test scenario data (step S206).

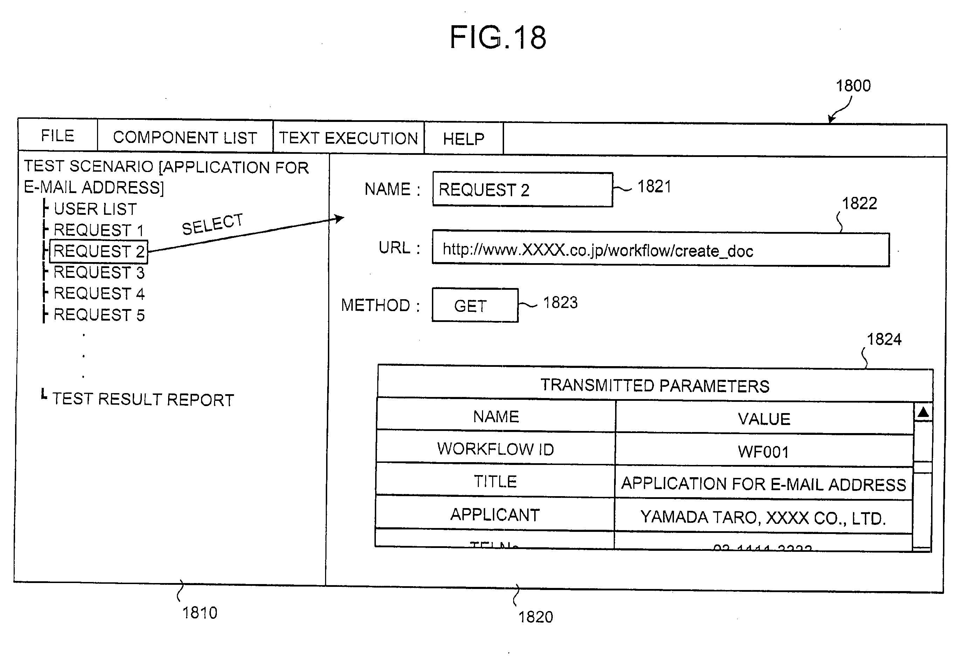

Thereafter, when the user edits the test scenario data after step S203 (Yes at step S207), the user edits the test scenario. Fig. 18 is a schematic for illustrating an example of the test scenario edit screen displayed using the test tool. A test scenario edit screen 1800 has a test scenario structure display area 1810 for displaying a structure of a component of a test scenario, and a component contents display area 1820 for displaying the contents of a component selected in the test scenario structure display area 1810. The component contents display area 1820 includes a name 1821 to display a component name, a URL 1822 when the component is a request, a method 1823 of the contents of a method when the component is a request, and a transmitted parameter 1824 of the contents of parameters within the component. In Fig. 18, a "request 2" is selected as a component in the test scenario structure display area 1810.

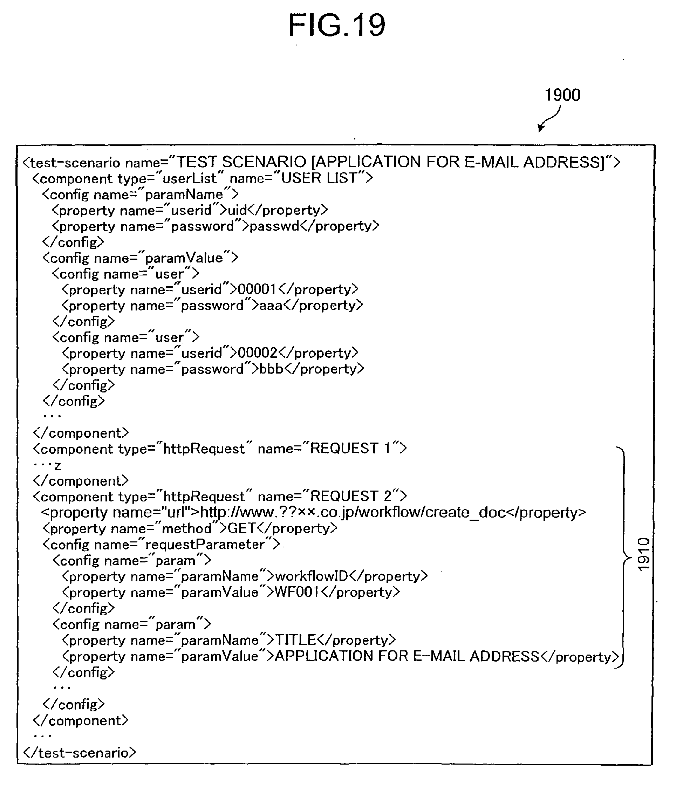

The test scenario edit screen 1800 shown in Fig. 18 is generated from the test scenario data that is downloaded by the client computer 2 from the server 3 and is stored into the data storage 23 at step S171 shown in Fig. 16. Fig. 19 is an example of a data structure of test scenario data that becomes a basis of the test scenario edit screen shown in Fig. 18. This test scenario data has a data structure of the XML format, and includes the contents of a request converted into data of the XML format by the data format converter 343 of the proxy function unit 34 of the server. As shown in Fig. 19, the contents of the request (HTTP request) concerning the document (circular) transmitted by the user are recorded as indicated by a block 1910. In other words, parameter values included in the request transmitted from the client computer 2 by the user are recorded.

The user edits the component or the request that is necessary to carry out a test, for each item within the component contents display area 1820, on the test scenario edit screen 1800 shown in Fig. 18. A result of the editing is reflected to the test scenario data 1900 in the XML format shown in Fig. 19.

Thereafter, when the test scenario data is not edited at step S207 (No at step S207), the user determines whether the test scenario data is to be stored (step S209). When the test scenario data is to be stored (Yes at step S209), the store processor 242 stores the test scenario data (step S210), and ends the edit processing of the test scenario data. In this case, a test scenario data storing position can be assigned, and a recognizable data storing format (for example, the XML format or the CSV format) can be selected using the test tool. When it is determined at step S209 that the test scenario data is not stored (No at step S209), the test scenario edit processing ends.

In the addition of a component at step S202 and in the editing of test scenario data at step S208, the test tool 24 prepares components to carry out addition or deletion of a request, addition, change, or deletion of a request parameter, setting of a load pattern, repetition processing, setting of a delay time, and test result processing. By combining these parameters, a further detailed test scenario can be customized.

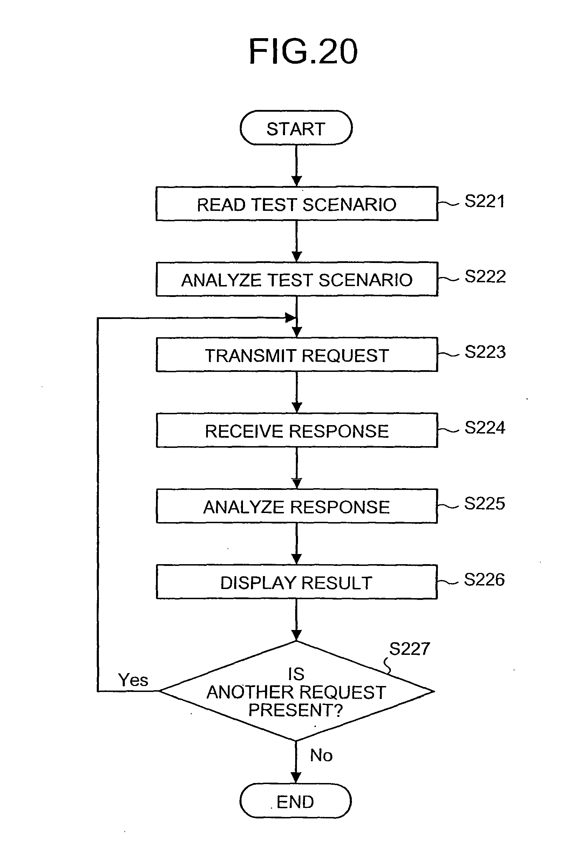

Fig. 20 is a flowchart of a procedure of the execution processing of a test scenario by the client computer.
First, the action analyzer 245 of the client computer 2 reads test scenario data to be executed assigned by the user, from the data storage 23 (step S221), and analyzes a test scenario included in the test scenario data (step S222). The transmission processor 243 transmits a request to the server 3 based on the request in the analyzed test scenario (step S223). The server 3 processes the received request, generates, updates, or deletes the data in the data storage 35 when necessary, thereby generating a response, and returns the response to the client computer 2.

Thereafter, when receiving the response from the server 3 in response to the request (step S224), the client computer 2 analyzes the response (step S225), and displays a result of the analysis in the web browser 22 via the display processor 241 (step S226). The user confirms the displayed test result, and confirms whether the test is successfully carried out based on the test scenario. Confirmation contents of the test result include a confirmation of whether the server 3 correctly transmits an e-mail to the client computer 2 of the approver defined in the e-mail transmission definition 303, a confirmation of whether the server 3 correctly displays a document (circular) to the client computer 2, and a confirmation of whether scheduled persons are extracted as per the flow definition 301 and set to the e-mail transmission definition 303 in the document (circular) transmitted to the client computer 2 of the approver, for example. The user confirms whether the processing is carried out to match the contents of the request to be executed in the test scenario, by checking the display contents. The action analyzer 245 determines whether other requests are present in the test scenario (step S227). When other requests are present (Yes at step S227), the process returns to step S223. When other requests are not present (No at step S227), the test scenario execution processing ends.

According to the present embodiment, a workflow in the workflow management system can be tested efficiently. For example, conventionally, in testing a workflow in each of the approval routes of a route A, B, D, and I, a route A, B, D, and J, a route A, B, E, and K, and the like, a request for carrying out the test in each approval route is manually generated. On the other hand, according to the present embodiment, when the test mode is set to ON and when a test scenario of the route A, B, D, and I is generated, for example, the test of the workflow in this approval route A, B, D, and I can be executed using this scenario. To test the workflow in the approval route A, B, D, and J, the test scenario of the approval route A, B, D, and I can be used, by only editing the last approver "I" to change to "J". To test the workflow in the approval route A, B, E, and F, the part "A, B" of the test scenario of the route A, B, D, and I can be used. To test a workflow in a complex approval route having a return part such as an approval route A, B, D, I, D, and J, the collected test scenarios of the route A, B, D, and I can be used. As explained above, when the workflows actually processed in the workflow management system are collected in the form of a test scenario, the labor of the user who carries out the test can be saved in executing the test of the workflow.

According to the present embodiment, a prototype called a business process definition is prepared for each operation application. Therefore, when the collected scenarios are used to change the application contents in testing the workflow, the approval route can be automatically changed according to the changed application contents. Consequently, the same test scenario can be used to test a workflow by changing the approval route according to the application contents.

When a new workflow management system is to be introduced in a certain organization, test scenarios already used in another organization having a similar structure or in another organization having a similar workflow rule can be collected and used for the test processing of the workflow in the workflow management system to be newly introduced in this organization, thereby decreasing the test load of a testing person.

### INDUSTRIAL APPLICABILITY

As described above, the workflow management system according to the present invention is useful for an organization that carries out a workflow processing such as a reading of a circular and a testing of a workflow by using a computer.

## Claims

1. A workflow management device comprising:
a document generating unit that sets the following definitions based on a request from a client computer of a person within an organization, and generates a circular document, the definitions including: a flow definition for setting an approval route, having a set sequence of persons within the organization to whom a circular is to be circulated, to a prototype held by an operation application for generating the circular, and for changing the set approval route following an input item definition; an e-mail transmission definition for notifying presence of a circular document to a client computer of a next approver on the approval route; and the input item definition for setting application contents of the circular;
a flow control unit that selects the next approver based on the flow definition and sets the selected approver to the e-mail transmission definition, when an earlier approver on the approval route completes reading of the circular; and
an e-mail transmitting unit that notifies presence of the circular document to a client computer of the next approver based on the e-mail transmission definition, the workflow management device further comprising
a proxy unit that records requests concerning the circular document transmitted from the client computer during the circulation of the circular document, and generates a test scenario that has the requests disposed in the order of the approval route, wherein
the workflow management device tests a workflow of the operation application, using the test scenario based on an instruction from the client computer.

2. The workflow management device according to claim 1, further comprising a proxy function setting unit that sets a proxy setting condition including a kind of request to be recorded by the proxy unit, and a port number of the own device that carries out the recording.

3. The workflow management device according to claim 2, wherein the proxy function setting unit further has a function of selecting whether the proxy unit can execute the recording of the request.

4. The workflow management device according to claim 2, wherein the proxy function setting unit can set the proxy setting condition in an operation application unit when a plurality of operation applications are present.

5. The workflow management device according to claim 2, further comprising a data storage unit that stores test scenario data including the proxy setting condition and a test scenario generated from requests collected based on the proxy setting condition.

6. The workflow management device according to claim 5, further comprising a test scenario managing unit that processes test scenario data retrieved from the data storage unit, based on an instruction from the client computer.

7. The workflow management device according to claim 5, wherein
the proxy unit has:
a request processing function of obtaining a request from the client computer;
a filtering function of filtering a kind of request to be recorded, based on the proxy setting condition; and
a data store processing function of storing a request extracted based on the filtering function as test scenario data, into the data storage unit.

8. The workflow management device according to claim 7, wherein the proxy unit further has a data format converting function of converting the request extracted based on the filtering function into data of a data format that can be processed by the client computer.

9. A workflow management system in which client computers belonging to a plurality of persons within an organization and a workflow management device that manages a workflow processing on a business process between the client computers are connected via a network, wherein
the workflow management device comprises:
a document generating unit that sets the following definitions based on a request from the client computer of a person within an organization, and generates a circular document, the definitions including: a flow definition for setting an approval route, having a set sequence of persons within the organization to whom a circular is to be circulated, to a prototype held by an operation application for generating the circular, and for changing the set approval route following an input item definition; an e-mail transmission definition for notifying presence of a circular document to a client computer of a next approver on the approval route; and the input item definition for setting application contents of the circular;
a flow control unit that selects the next approver based on the flow definition and sets the selected approver to the e-mail transmission definition, when an earlier approver on the approval route completes reading of the circular;
an e-mail transmitting unit that notifies presence of the circular document to a client computer of the next approver based on the e-mail transmission definition; and
a proxy unit that records requests concerning the circular document transmitted from the client computer during the circulation of the circular document, and generates a test scenario that has the requests disposed in the order of the approval route, wherein
the client computer has a testing unit that receives the test scenario generated by the proxy unit of the workflow management device, and that executes the received test scenario.

10. The workflow management system according to claim 9, wherein the testing unit of the client computer further has a function of editing the test scenario received from the workflow management device.

11. A test scenario generation method in a workflow management system in which client computers belonging to a plurality of persons within an organization and a workflow management device that manages a workflow processing on a business process between the client computers are connected via a network, the test scenario generation method comprising:
a proxy function setting step of setting a proxy setting condition to the workflow management device by the client computer, the proxy setting condition for making the workflow management device collect requests transmitted from the client computers regarding a circular document circulated among the persons within the organization; and
a test scenario generating step of collecting requests transmitted from the client computers and generating test scenario data by the workflow management device, based on the proxy setting condition set at the proxy function setting step.

12. The test scenario generation method according to claim 11, wherein at the proxy function setting step, a condition including a kind of request recorded by the workflow management device and a port number of the workflow management device that carries out the recording is set as the proxy setting condition.

13. The test scenario generation method according to claim 11, wherein at the proxy function setting step, it is possible to select whether the test scenario generating step can be executed.

14. The test scenario generation method according to claim 11, wherein at the proxy function setting step, the proxy setting condition can be set in an operation application unit when a plurality of operation applications are present in the workflow management device.

15. The test scenario generation method according to claim 11, wherein
the test scenario generating step including
a request processing step of obtaining requests from the client computers;
a filtering step of filtering a kind of request to be recorded, based on the proxy setting condition; and
a data store processing step of storing requests extracted at the filtering step.

16. The test scenario generation method according to claim 15, wherein the test scenario generating step further includes a data format converting step of converting the request extracted at the filtering step into data of a data format that can be processed by the client computer.
